# EUROPEAN PATENT SPECIFICATION

(11) **EP 3 297 567 B1**
(45) Date of publication and mention of the grant of the patent: **07.07.2021**
(21) Application number: 16736925.5
(22) Date of filing: 23.05.2016
(51) Int. Cl.: A61C 1/00, A61C 5/42

(54) **REAMER WITH IMPROVED BLADE FOR NI-TI INSTRUMENTS FOR ENDODONTIC USE**
RÄUMER MIT VERBESSERTER KLINGE FÜR NI-TI-INSTRUMENTE ZUR ENDODONTISCHEN VERWENDUNG
ALÉSOIR À LAME AMÉLIORÉE POUR DES INSTRUMENTS NI-TI DESTINÉS À UNE UTILISATION ENDODONTIQUE

(30) Priority: 21.05.2015 IT UB20150710
(43) Date of publication of application: 28.03.2018
(73) Proprietor: Malagnino, Giulia, 00134 Roma (IT)
(72) Inventor: Malagnino, Giulia, 00134 Roma (IT)
(74) Representative: Santi, Filippo
(86) International application number: PCT/IT2016/000133
(87) International publication number: WO 2017/154029

(56) References cited:
- EP-A1- 0 120 542
- WO-A2-2010/086887
- US-A- 6 074 209
- US-A1- 2014 356 809
- US-A1- 2015 072 307

## Description

The present invention relates to a reamer with improved blade for Ni-Ti instruments for endodontic use.

More specifically, the invention relates to an instrument of the type indicated in the above, having technical characteristics permitting a better and more effective use by the dentist.

As it is well known, in recent years the use of nickel-titanium instruments for endodontic preparation has been widely used.

These instruments are used in the root canals, with a continuous movement of rotation ensured by a "counter-angle handpiece", connected to an endodontic motor, which enables a rotation speed comprised between 250 and 350 revolutions per minute.

The continuous rotation at this speed allows to obtain great efficiency and work speed. This rotation speed can be used with Ni-Ti instruments, but it cannot be the same traditional steel tools, since Ni-Ti alloy has superelasticity and consequently flexibility and elasticity (or shape memory) characteristics, so as to allow the instrument to forward while rotating in the channels, circumferentially cutting dentin without deformation even in case they need to follow curved trajectories.

The rotation movement of a continuous spiral-shaped blade in a channel involves a spontaneous advancement of the instrument, in a manner similar to a screw rotated in a suitable seat.

Such an attitude of the instrument during its rotation determines the need, by the dentist, to "control" said advancement to avoid a too rapid and, thus, "uncontrolled" progression which would involve a blockage risk and also breakage of the instrument.

This control is normally obtained with an "incremental advancement movement", manually actuated by the dentist, of about a millimeter each time: the instrument is lft advancing 1 mm and then withdrawn slightly backwards, to be then made advanced again, and so on.

However, despite the use of this advancement technique, it happens that, when, during its advancement, the instrument impacts on the channel wall for an excessive length, the instrument may suddenly be subjected to an uncontrolled forward acceleration, which leads it to stop and eventually breaking inside the channel. This effect is known under the name of "screwing".

Since each instrument having precise diameters from the tip (each instrument has its own tip diameter and tapering, measured in hundredths of a mm) and being each instrument part of a sequence of instruments with different sizes (in particular, in the present case increasing measures), it is possible calculating the depth at which, with each specific tool, this excessive engagement can occur, and thus the possible "screwing."

A first solution to the "screwing" problem is that proposed by FKG company by an instrument commercialized as Race®. In this case, all along the working part of the blade, it has an alternation of 2-3 mm of spiral with a first picth and 2-3 mm of spiral with different pitch.

Moreover, there are available currently on the market instruments characterized by two cutting blades, a growing pitch, and a not active tip.

Particularly, the most recent instruments are realized with the following sequence (the first digit refers to the diameter of the instrument and the second digit to the tapering angle): 0.10mm-4%, 0,15mm-5%, 0-20mm-6%, 0.25m-6%. With the introduction of this novel sequence, NiTi instruments have been realized significantly more performing compared to those previously known.

However, even the above-mentioned solution does not allow to avoid the occurrence of the "screwing" technical problem described in the above.

A solution to this problem has been provided in the Italian patent application RM2009A000045 (extended as International Patent Application PCT/GB/2010/00018 and published as WO 2010/086887 A2) in which it is proposed a solution which involves the construction of Ni-Ti instruments, preferably with two blades, increasing pitch and not active tip and an interruption portion of the blades provided at a certain distance from the tip.

Another solution to the above problem has been suggested in the Italian patent application RM2010A000610, showing a reamer provided with a plurality of cylindrical or frusto-conical longitudinal portions, separated each other.

A further similar solution is disclosed in US patent application n. US 2014/0356809 A1.

In view of the above, it is therefore, object of the present disclosure to provide an improved technical solution to the "screwing" problem described in the above.

The invention is defined by the appended claims.

It is therefore specific object of the present disclosure a reamer with improved blade for Ni-Ti instruments for endodontic use, said reamer comprising a not active tip and at least one blade having, at least partially, a substantially spiral development and comprising a crest where a plurality of undulations is formed, such that said plurality of undulations causes a deceleration or an interruption during advancing motion of said reamer when using said reamer for enlarging a channel.

Preferably, according to the disclosure said plurality of undulations is formed by a plurality of depressions.

Advantageously, according to the disclosure, the depressions of said plurality of depressions are substantially reciprocally equidistant.

Furthermore, according to the disclosure, the depressions of said plurality of depressions are arranged at different distances from one another.

Moreover, according to the disclosure, the undulations of said plurality of undulations can extend from one side to other side with respect to a respective spiral trajectory developing along said reamer.

It is specific object of the present invention a reamer with improved blade for Ni-Ti instruments for endodontic use, said reamer comprising a not active tip and at least one blade having, at least partially, a substantially spiral development; said at least one blade having at least one interruption defining a fist blade end and a second blade end in said at least one blade, so that, when using said reamer for enlarging a channel, said at least one interruption causes a slowing or an interruption of the advancement motion of said reamer.

According to an example, not being part of the invention, said first blade end and said second blade end can be mutually offset transversely with respect to said reamer.

Alternatively, according to another example not part of the invention, said first blade end and said second blade end can be mutually offset longitudinally in said reamer in such a way that a first blade portion comprising said first blade end and a second blade portion comprising said second of blade end are arranged in a predetermined circumferential band of said reamer.

Alternatively, according to another example, not being part of the invention, said first blade end and said second blade end can be mutually offset longitudinally in said reamer in such a way that a first blade portion comprising said first blade and and a second blade portion comprising said second blade end are mutually longitudinally separated in said reamer.

Preferably, according to an example not part of the invention, said at least one blade comprises a ridge in which it is realized a plurality of undulations, so that, during the use of said reamer to carry out the enlargement of a channel, said plurality of undulations result in a slowing or an interruption of the advancement motion of said reamer.

Furthermore according to the disclosure, said plurality of undulations can be formed by a plurality of depressions.

Advantageously, according to the disclosure, the undulations of said plurality of undulations can extend from one side to the other with respect to a respective spiral-shaped path extending along said reamer.

Still according to the disclosure, said at least one blade can comprise two or three blades with a substantially spiral development.

The present invention will be now described, for illustrative but not limitative purposes, according to its preferred embodiments, with particular reference to the figures of the enclosed drawings, wherein:
figure 1 shows a reamer with blade for endodontic use according to the prior art;
figure 2 shows a reamer with blade for endodontic use according to a first embodiment of the present disclosure;
figure 3 is a detail view of figure 2;
figure 4 is a cross section view of the reamer shown in figures 2 and 3;
figure 5 shows a reamer with blade for endodontic use in a second embodiment of the present disclosure;
figure 6 is a detail view of figure 4;
figure 7 is a cross section view of the reamer shown in figures 5 and 6;
figure 8 shows a reamer with blade for endodontic use in a third embodiment of the present disclosure;
figure 9 is an enlarged cross-sectional view of the reamer shown in figure 8;
figure 10 is a detail view taken from figure 8;
figure 11 shows a reamer with blade for endodontic use in a fourth embodiment of the present disclosure;
figure 12 shows a reamer with blade for endodontic use according to a fifth embodiment, which is also part of the present invention;
figure 13 shows a reamer with blade for endodontic use in a sixth embodiment of the present disclosure;
figure 14 shows a reamer with blade for endodontic use in a seventh embodiment of the present disclosure;
figure 15 shows a reamer with blade for endodontic use in a eighth embodiment, which is also part of the claimed invention; and
figure 16 shows a reamer with blade for endodontic use in a ninth embodiment of the present disclosure.

In the various figures similar parts will be indicated with the same reference numerals.

In the following specific solutions of the instrument according to the invention will be described, but it is understood that the measures mentioned are simply indicative, and that the solutions suggested provide the same results with measures different with respect to those indicated in the following.

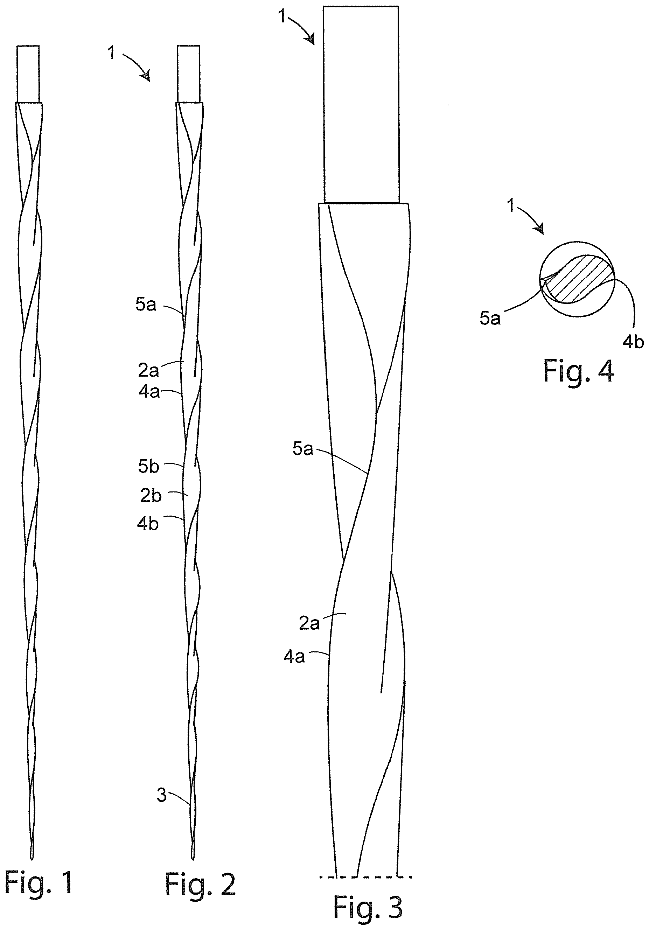

Referring to Figures 2, 3 and 4, by the reference number 1 is shown a reamer with blade for endodontic use, provided with a first spiral-shaped blade 2a and a second spiral-shaped blade 2b, offset each other by 180° (see figure 4).

In the above reamer 1 it is also provided, in correspondence of one of its ends, a not active tip 3.

The first blade 2a and the second blade 2b respectively have a ridge 4a, 4b, namely a cutting wire, in which is formed a plurality of undulations 5a, 5b with respect to the traditional spiral-shaped profile, i.e. nominal, of the ridge of the blade, shown in figure 1.

Preferably, the undulations of each one of the two plurality of undulations 5a, 5b are substantially equidistant.

However, according to further embodiments not shown in the enclosed drawings, these undulations can be at mutual increasing or decreasing distances towards the not active tip 3 of the reamer 1.

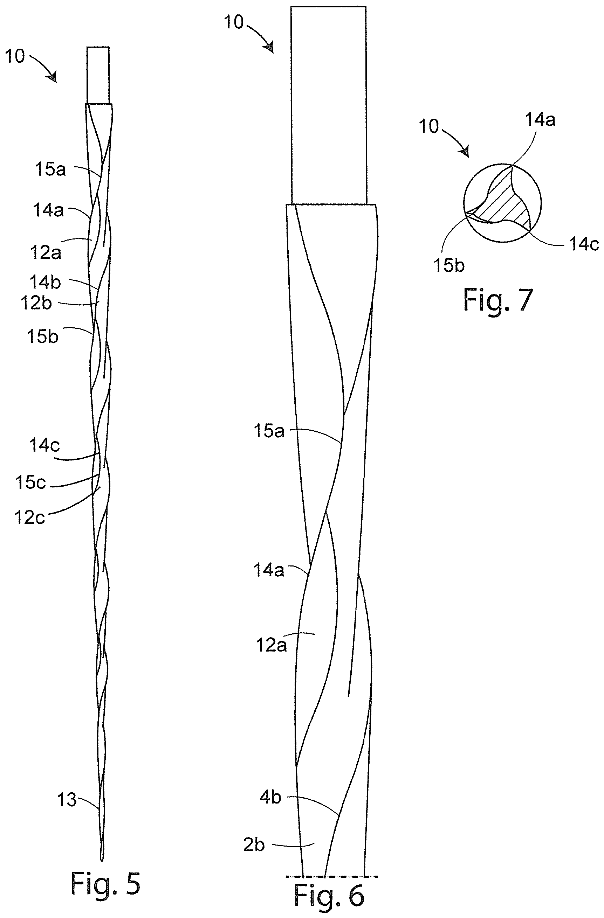

Referring now to Figures 5, 6 and 7, there is shown a second boring machine for use in endodontic blade 10, also having a respective tip 13 is not active.

In this second blade reamer 10 for endodontic use there are also provided a first blade 12a, a second blade 12b and a third blade 12c, all spiral-shaped, offset by 120° and respectively provided with a first ridge 14a (i.e., a first cuttingwire), a second ridge 14b (i.e. a second cutting wire) and a third ridge 14c (i.e., a third cutting wire).

Also in this second embodiment, along the first ridge 14a, the second ridge 14b and the third ridge 14c there are respectively realized a first plurality of undulations 15a, a second plurality of undulations 15b and a third plurality of undulations 15c.

In this case too, the undulations of the first blade 12a, as well as those of the second blade 12b and of the third blade 12c, preferably substantially equidistant each other.

These undulations, as well as for the embodiment with two blades described in the above, can be provided at mutual increasing or decreasing distances toward the not active tip 13 of the reamer 10.

According to a further sub-optimal embodiment not shown in the appended figures, the reamer may provide a single a substantially spiral-shaped blade.

Each one of said undulations is, basically, a kind of discontinuity in the spiral-shaped trajectory of each blade.

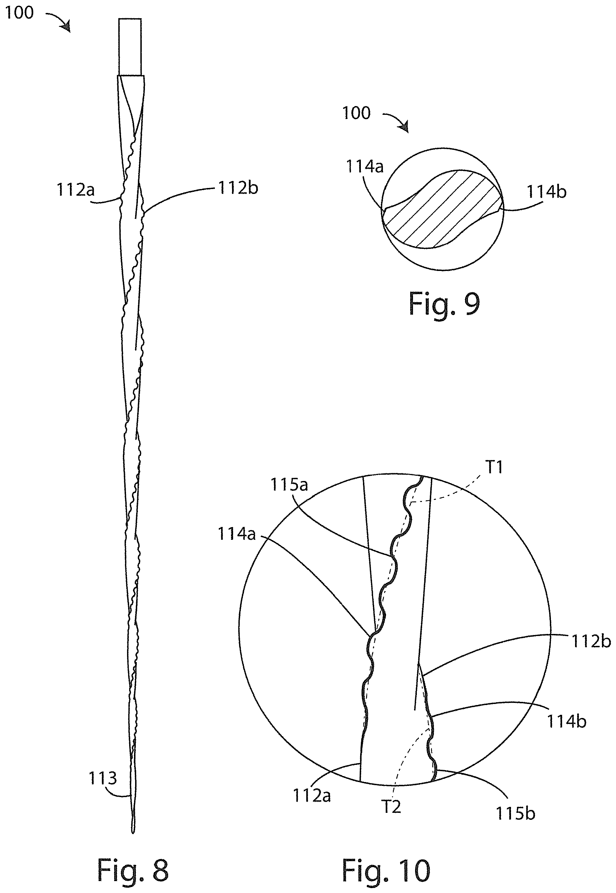

Referring now to Figures 8, 9 and 10, a reamer 100 with blade for endodontic use is represented according to a further embodiment.

Such a reamer 100 provides a not active tip 113, and a first blade 112a and a second blade 112b developing along the longitudinal extension of the reamer 100 with a substantially spiral-shaped run.

Each one of said first blade 112a and said second blade 112b has a respective ridge 114a, 114b having a wave-like pattern, so as to define, respectively, a first undulation 115a and a second undulation 115b.

Particularly, said first undulation 115a and said second undulation 115b develop along the reamer 100 extending from side to side with respect to the normal spiral trajectories T1, T2 described by the two traditional blades (see figure 10).

According to other embodiments not shown in the enclosed figures, the reamer 100 may provide three or more blades equal to the blades 112a, 112b described above, developing along the longitudinal extension of the reamer 100, but on the not active tip 113.

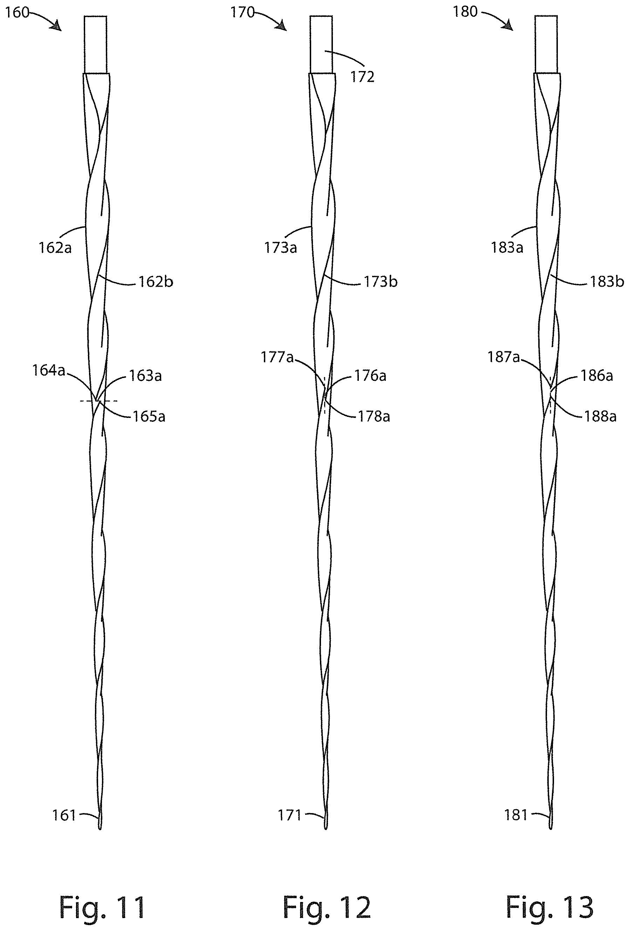

Referring now to figure 11, there is shown a reamer 160 provided with a not active tip 161, located at one end of said reamer 160.

The reamer machine 160 is also provided with a first blade 162a and a second blade 162b, offset each other by 180°, developing along the longitudinal extension of the same reamer 160 with a substantially spiral-shape.

An interruption 163a is provided in the first blade 162a and/or in the second blade 162b formed by a transverse offset of the ends 164a, 165a of the interrupted portions of the blade.

In figure 12 it is instead represented a reamer 170 according to the invention provided with a not active tip 171 and a coupling shank 172 identified at the end opposite with respect to the not active tip 171.

The reamer 170 has a first blade 173a and a second blade 173B, offset each other by 180°, having a substantially spiral run along the longitudinal extension of the same reamer 170.

In the first blade 173a and/or in the second blade 173b it is provided an interruption 176a formed by a longitudinal offset of the ends 177a, 178a of the interrupted portions of the blade, so as to create an overlap, in the longitudinal direction of the reamer 170, of the interrupted blade portions.

Therefore, the interrupted portion of the next blade, i.e. that towards the not active tip 171, is shifted by a predetermined longitudinal distance toward the coupling shank 172, with respect to the portion of previous interrupted blade, i.e. that part of the side of said coupling shank 172, in such a way that the interrupted portions of blade defined by said ends 177a, 178a occupy the same circumferential band of the reamer 170.

With reference to Figure 13, there is shown a reamer 180 provided with a not active tip 181.

The reamer 180 provides, on its outer surface, a first blade 183a and a second blade 183B, offset by 180° and having a substantially spiral run along the longitudinal extension of the same reamer 180.

In the first blade 183a and/or in the second blade 183b ther is an interruption 186a realized by a longitudinal offset of the ends 187a, 188a of the interrupted portions of the blade, so as to create a separation in the longitudinal direction of the reamer 180, of the interrupted portions of the blade.

Therefore, the interrupted portion of the next blade, i.e. the ona towards the not active tip 181, it is shifted by a predetermined longitudinal distance toward said not active tip 181, with respect to the portion of previous interrupted blade, so that the interrupted blade portions defined by said ends 187a, 188a are separated each other in the longitudinal direction of the reamer 180.

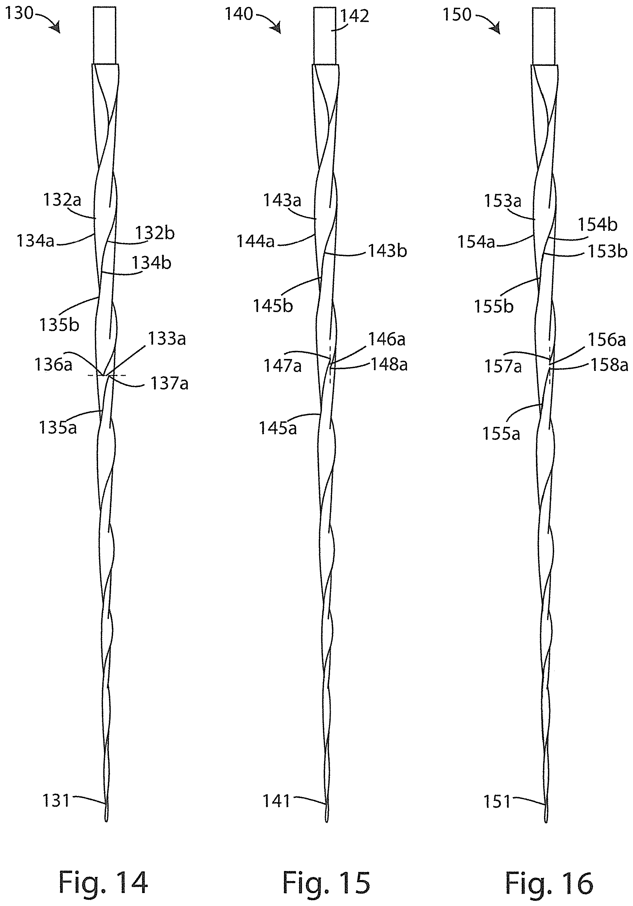

Referring now to Figure 14, there is shown a reamer 130 equipped with a not active tip 131, provided at one end of said reamer 130.

The reamer 130 is also provided with a first blade 132a and with a second blade 132b, offset each other by 180°, developing along the longitudinal extension of the same reamer 130 with a substantially spiral-shape.

The first blade 132a and the second blade 132b respectively have a ridge 134a, 134b, i.e. a cutting wire, in which it is formed a plurality of undulations 135a, 135b with respect to the traditional spiral-shaped profile, i.e. nominal, of the blade ridge.

In the first blade 132a and/or in the second blade 132b there is provided an interruption 133a realized by a transverse offset of the ends 136a, 137a of the interrupted portions of the blade.

In figure 15 it is instead represented a reamer 140 according to the invention provided with a not active tip 141 and a coupling shank 142 identified at the end opposite with respect to the not active tip 141.

The reamer 140 has a first blade 143a and a second blade 143b, offset each other by 180°, having a substantially spiral run along the longitudinal extension of the same reamer 140.

The first blade 143a and the second blade 143b respectively have a ridge 144a, 144b, i.e. a cutting wire, in which it is created a plurality of undulations 145a, 145b with respect to the traditional spiral-shaped profile, i.e. nominal, of the blade ridge.

Furthermore, in the first blade 143a and/or in the second blade 143b it is provided an interruption 146a created by a longitudinal offset of the ends 147a, 148a of the interrupted blade portions, so as to realize an overlap, in the longitudinal direction of the reamer 140, of the interrupted portions of the blade.

Therefore, the interrupted portion of the following blade, i.e. the one towards the not active tip 141, it is shifted by a predetermined longitudinal distance toward the coupling shank 142, with respect to the portion of previous interrupted blade, i.e. that on the side of said coupling shank 142, in such a way that the portions of blade interrupted defined by the ends 147a, 148a occupy the same circumferential band of the reamer 140. making, finally, reference to Figure 16, there is shown a REAMER 150 provided with a not active tip 151.

The reamer 150 provides, on its outer surface, a first blade 153a and a second blade 153b offset each other by 180° and having a substantially spiral run along the longitudinal extension of the same reamer 150.

Particularly, the first blade 153a and the second blade 153b respectively have a ridge 154a, 154b, i.e. a cutting wire, in which it is formed a plurality of undulations 155a, 155b with respect to the traditional spiral-shaped profile, i.e. nominal, of the blade ridge.

Furthermore, in the first blade 153a and/or in the second blade 153b it is provided an interruption 156a realized by a longitudinal offset of the ends 157a, 158a of the interrupted portions of the blade, so as to create a separation in the longitudinal direction of the reamer 150, of the portions the interrupted blade.

Therefore, the interrupted portion of the following blade, i.e. the one towards the not active tip 151, it is shifted by a predetermined longitudinal distance toward said not active tip 151, with respect to the portion of the previous interrupted blade, so that the interrupted blade portions defined bt said ends 157a, 158a are separated each other according to the longitudinal direction of the reamer 150.

According to further embodiments not shown in the enclosed figures, the reamer 130, 140, 150, 160, 170, 180 may provide, each one, only one blade or three or more blades with one or more interruptions formed by offsets as described in the above.

In practice, when, during the widening of a channel performed by one of the reamers described above, each undulation or interruption comes into contact with the part to be enlarged, the latter reacts opposing a greater resistance to the rotation of the reamer itself and therefore to the relative advance in depth.

In this way, during the enlargement operation a series of delays/interruptions are created in the instrument progression to enlarge the area.

The occurrence of these continuous delays/interruptions allows to have a greater control of the instrument and avoid hasty and uncontrolled progress of the same and therefore the phenomenon of "screwing" described in the above.

The present invention has been described for illustrative but not limitative purposes, according to its preferred embodiments, but it is to be understood that variations and/or modifications may be introduced by those skilled in the art without departing from the scope as defined by the enclosed claims.

## Claims

1. Reamer (170, 140) with improved blade for Ni-Ti instruments for endodontic use, said reamer (170, 140) comprising a not active tip (171, , 141) and at least one blade (173a, 173b; 143a, 143b) having, at least partially, a substantially spiral development along the longitudinal extension of the reamer (170, 140); said at least one blade (173a, 173b; 143a, 143b) having at least one interruption (176a, 146a) defining a first blade end (178a, 147a) and a second blade end (177a, 148a) in said at least one blade (173a, 173b; 143a, 143b), so that, when using said reamer (170, 140) for enlarging a channel, said at least one interruption (176a, 146a) causes a slowing or an interruption of the advancement motion of said reamer (170, 140), said reamer (170, 140) being **characterized in that** said first blade end (178a, 148a) and said second blade end (177a, 147a) are mutually offset longitudinally in said reamer (170, 140), so as to create an overlap in the longitudinal direction of the reamer (170, 140), in such a way that a first blade portion comprising said first blade end (178a, 148a) and a second blade portion comprising said second of blade end (177a, 147a) are arranged in a predetermined circumferential band of said reamer.

2. Reamer (140) according to claim 1, **characterized in that** said at least one blade (143a, 143b) comprises a ridge (144a) in which it is realized a plurality of undulations (145a, 145b), so that, during the use of said reamer (140) to carry out the enlargement of a channel, said plurality of undulations (145a, 145b) result in a slowing or an interruption of the advancement motion of said reamer (140).

3. Reamer (140) according to claim 2, **characterized in that** said plurality of undulations can be formed by a plurality of depressions (145a, 145b).

4. Reamer according to claim 3, **characterized in that** the depressions of said plurality of depressions are substantially reciprocally equidistant.

5. Reamer according to claim 3, **characterized in that** the depressions of said plurality of depressions are arranged at different distances from one another.

6. Reamer according to claim 2, **characterized in that** the undulations of said plurality of undulations extend from one side to the other with respect to a respective spiral-shaped path extending along said reamer.

7. Reamer (140, 170) according to any one of the preceding claims, **characterized in that** said at least one blade (173a, 173b; 143a, 143b) comprises two or three blades with a substantially spiral development.

## Patentansprüche

1. Reibahle 140) mit verbesserter Klinge für Ni-Ti-Instrumente zur endodontischen Verwendung, wobei die Reibahle (170, 140) eine nicht aktive Spitze (171, 141) und mindestens eine Klinge (173a, 173b; 143a, 143b) umfasst, die mindestens teilweise einen im Wesentlichen spiralförmigen Verlauf entlang der Längsausdehnung der Reibahle (170, 140) aufweist; wobei die mindestens eine Klinge (173a, 173b; 143a, 143b) mindestens eine Unterbrechung (176a, 146a) aufweist, die ein erstes Klingenende (178a, 147a) definiert, und ein zweites Klingenende (177a, 148a) in der mindestens einen Klinge (173a, 173b; 143a, 143b) derart, dass beim Verwenden der Reibahle (170, 140) zum Vergrößern eines Kanals die mindestens eine Unterbrechung (176a, 146a) eine Verlangsamung oder eine Unterbrechung der Vorschubbewegung der Reibahle (170, 140) verursacht, wobei die Reibahle (170, 140) **dadurch gekennzeichnet ist, dass** das erste Klingenende (178a, 148a) und das zweite Klingenende (177a, 147a) gegenseitig entlang der Reibahle (170, 140) derart versetzt sind, dass eine Überlagerung in die Längsrichtung der Reibahle (170, 140) derart geschaffen wird, dass ein erster Klingenabschnitt, der das erste Klingenende (178a, 148a) umfasst, und ein zweiter Klingenabschnitt, der das zweite Klingenende (177a, 147a) umfasst, in einem vorbestimmten umfänglichen Band der Reibahle eingerichtet sind.

2. Reibahle (140) nach Anspruch 1, **dadurch gekennzeichnet, dass** die mindestens eine Klinge (143a, 143b) eine Rippe (144a) umfasst, in der eine Vielzahl von Wellungen (145a, 145b) derart realisiert ist, dass während der Verwendung der Reibahle (140) zum Ausführen der Vergrößerung eines Kanals die Vielzahl von Wellungen (145a, 145b) in einer Verlangsamung oder einer Unterbrechung der Vorschubbewegung der Reibahle (140) resultiert.

3. Reibahle (140) nach Anspruch 2, **dadurch gekennzeichnet, dass** die Vielzahl von Wellungen von einer Vielzahl von Vertiefungen (145a, 145b) gebildet sein kann.

4. Reibahle nach Anspruch 3, **dadurch gekennzeichnet, dass** die Vertiefungen der Vielzahl von Vertiefungen im Wesentlichen voneinander gegenseitig beabstandet sind.

5. Reibahle nach Anspruch 3, **dadurch gekennzeichnet, dass** die Vertiefungen der Vielzahl von Vertiefungen in unterschiedlichen Distanzen voneinander eingerichtet sind.

6. Reibahle nach Anspruch 2, **dadurch gekennzeichnet, dass** sich die Wellungen der Vielzahl von Wellungen von einer Seite zu der anderen in Bezug auf einen jeweiligen spiralförmigen Pfad, der sich entlang der Reibahle erstreckt, erstrecken.

7. Reibahle (140, 170) nach einem der vorstehenden Ansprüche, **dadurch gekennzeichnet, dass** die mindestens eine Klinge (173a, 173b; 143a, 143b) zwei oder drei Klingen mit einem im Wesentlichen spiralförmigen Verlauf umfasst.

## Revendications

1. Alésoir (170, 140) ayant une lame améliorée pour des instruments en Ni-Ti pour une utilisation endodontique, ledit alésoir (170, 140) comprenant une pointe non active (171, 141) et au moins une lame (173a, 173b ; 143a, 143b) présentant, au moins partiellement, un développement sensiblement en spirale le long de l'extension longitudinale de l'alésoir (170, 140) ; ladite au moins une lame (173a, 173b ; 143a, 143b) présentant au moins une interruption (176a, 146a) définissant une première extrémité de lame (178a, 147a) et une seconde extrémité de lame (177a, 148a) dans ladite au moins une lame (173a, 173b ; 143a, 143b) de telle sorte que, lors de l'utilisation dudit alésoir (170, 140) pour agrandir un canal, ladite au moins une interruption (176a, 146a) provoque un ralentissement ou une interruption du mouvement d'avancement dudit alésoir (170, 140), ledit alésoir (170, 140) étant **caractérisé en ce que** ladite première extrémité de lame (178a, 148a) et ladite seconde extrémité de lame (177a, 147a) sont mutuellement décalées longitudinalement dans ledit alésoir (170,140) de telle manière qu'une première partie de lame comprenant ladite première extrémité de lame (178a, 148a) et une seconde partie de lame comprenant ladite seconde extrémité de lame (177a, 147a) soient agencées dans une bande circonférentielle prédéterminée dudit alésoir.

2. Alésoir (140) selon la revendication 1, **caractérisé en ce que** ladite au moins une lame (143a, 143b) comprend une crête (144a) dans laquelle il est réalisé une pluralité d'ondulations (145a, 145b) de telle sorte que, pendant l'utilisation dudit alésoir (140) pour réaliser l'agrandissement d'un canal, ladite pluralité d'ondulations (145a, 145b) provoque un ralentissement ou une interruption du mouvement d'avancement dudit alésoir (140).

3. Alésoir (140) selon la revendication 2, **caractérisé en ce que** ladite pluralité d'ondulations peut être formée par une pluralité de creux (145a, 145b).

4. Alésoir selon la revendication 3, **caractérisé en ce que** les creux de ladite pluralité de creux sont sensiblement réciproquement équidistants.

5. Alésoir selon la revendication 3, **caractérisé en ce que** les creux de ladite pluralité de creux sont agencés à différentes distances les uns des autres.

6. Alésoir selon la revendication 2, **caractérisé en ce que** les ondulations de ladite pluralité d'ondulations s'étendent d'un côté à l'autre par rapport à un trajet respectif en forme de spirale s'étendant le long dudit alésoir.

7. Alésoir (140, 170) selon l'une quelconque des revendications précédentes, **caractérisé en ce que** ladite au moins une lame (173a, 173b ; 143a, 143b) comprend deux ou trois lames ayant un développement sensiblement en spirale.
